# DEMANDE DE BREVET EUROPEEN

(11) **EP 4 574 687 A1**
(43) Date de publication de la demande: **25.06.2025**
(21) Numéro de dépôt: 24221812.1
(22) Date de dépôt: 19.12.2024
(51) Int. Cl.: B64U 10/14, B64U 20/40, B64U 20/80, B64U 50/19

(54) **DRONE COMPRENANT UN MODULE DE COMMUNICATION EXTERNE**

(30) Priorité: 19.12.2023 FR 2314498
(71) Demandeur: Hexadrone, 43330 Saint Ferréol d'Auroure (FR)
(72) Inventeur: LABESSE, Alexandre, 43240 SAINT JUST MALMONT (FR); BIGNY, Julien, 43330 SAINT FERREOL D'AUROURE (FR)
(74) Mandataire: Lavoix

(57) **Abrégé**

La présente invention concerne un drone (1) comprenant un corps (10) comportant une paroi extérieure délimitée par une surface externe (12), un contrôleur de vol (14) installé dans un volume interne (V10) du corps et un module de communication (40). Le module de communication comprend un boîtier (42) fixé mécaniquement de façon amovible sur la surface externe du corps du drone. Le module de communication est connecté au moins au contrôleur de vol au moyen d'une interface (60) comprenant une première partie d'interface (18) ménagée sur la surface externe du corps du drone et une deuxième partie d'interface (41) ménagée sur le boitier du module de communication.

## Description

La présente invention concerne un drone comprenant un module de communication externe.

Au sens de la présente invention, un drone est un appareil motorisé et mobile sans pilote, qui peut être contrôlé à distance pour se déplacer dans les airs, sur et sous l'eau ou au sol. Un drone comprend classiquement un corps et plusieurs bras supportant chacun un moteur, voire plusieurs moteurs, les différents moteurs permettant de déplacer le drone. Lorsqu'il s'agit d'un drone aérien à voilure tournante, les moteurs entraînent des hélices dont la rotation permet d'exercer un effort de sustentation du drone. Lorsqu'il s'agit d'un drone à voilure fixe, celui-ci peut planer et être propulsé par un ou des moteurs à hélices placés à l'avant ou l'arrière de la voilure. Lorsqu'il s'agit d'un drone terrestre, les moteurs entraînent des roues ou des chenilles.

Le drone est piloté à distance par un utilisateur au moyen d'une liaison de données bidirectionnelle établie par deux modules de communication dont un des modules de communication est fixé au corps du drone. La liaison de données établie par le module de communication a un domaine propre défini par une fréquence, une puissance et/ou un niveau de cryptage.

Il est connu de connecter le module de communication avec un contrôleur de vol du drone, ou à un ordinateur de bord, et d'enfermer le module de communication dans le corps du drone. Ce faisant le module de communication est à l'abri de l'eau et de la poussière.

Le module de communication est un élément très intrusif puisqu'il comprend au moins une antenne à laquelle il doit être connecté et dont l'extrémité doit dépasser à l'extérieur du corps du drone.

Il est connu de CN 218919271U d'utiliser des drones comprenant des antennes mécaniquement amovibles par rapport au corps du drone. Il est également connu de US 2018/079482 A1 de prévoir des baies modulables, ménagées dans le corps d'un avion, de sorte qu'une charge utile amovible puisse être fixée dans la baie.

Par soucis de respect des réglementations ou de confidentialité, l'utilisateur peut être amener à vouloir modifier le domaine de la liaison de données avec le drone, par exemple pour répondre à certains standards tels que AES128/256. La modification du domaine de liaison nécessite généralement le remplacement du module de communication. Le remplacement du module de communication n'est, cependant, pas aisé puisqu'il demande d'accéder à l'intérieur du corps du drone.

De plus, la forme et le nombre d'antenne(s) dépendant du domaine de liaison établie par le module de communication, un remplacement du module de communication implique le remplacement des antennes et peut impliquer une modification de la topologie du drone, notamment une modification des ouvertures de passage de câbles électriques entre le module de communication disposé à l'intérieur du corps du drone et chaque antenne disposée à l'extérieur de ce corps.

C'est à ces problèmes qu'entend plus particulièrement remédier l'invention, en proposant un drone avec un module de communication externe dont le montage et le démontage sont faciles à réaliser.

A cet effet, l'invention a pour objet un drone comprenant :
- un corps comportant une paroi extérieure délimitée par une surface externe ;
- un contrôleur de vol installé dans un volume interne du corps; et
- un module de communication ;
caractérisé en ce que :
- le module de communication comprend un boîtier ; et
- le boîtier du module de communication est fixé mécaniquement de façon amovible sur la surface externe du corps du drone et le module de communication est connecté au moins au contrôleur de vol au moyen d'une interface comprenant une première partie d'interface ménagée sur la surface externe du corps du drone et une deuxième partie d'interface ménagée sur le boitier du module de communication

Grâce à l'invention, le corps du drone comprend une première partie d'interface, ménagée sur la surface externe du corps du drone, permettant à l'utilisateur, via une deuxième partie d'interface ménagée sur le module de communication, de fixer mécaniquement et de façon amovible le module de communication sur le corps du drone et de le connecter au contrôleur de vol. Ainsi l'invention facilite le remplacement du module de communication pour l'adapter aux réglementations des différents territoires sur lesquels est utilisé le drone au cours de sa durée de vie. En effet, le module de communication étant fixé sur la surface externe du corps du drone, le remplacement du module de communication ne nécessite pas d'accéder à l'intérieur du corps du drone. De plus, le remplacement du module de communication ne nécessite pas de revoir la topologie et les branchements du drone puisque la connexion entre le module de communication et le contrôleur de vol est automatique au moyen de l'interface.

Suivant d'autres aspects avantageux de l'invention, un tel drone comprend une ou plusieurs des caractéristiques suivantes, prises isolément ou suivant toutes les combinaisons techniquement possibles :
- l'interface connecte le module de communication à une alimentation électrique.
- l'interface est étanche.
- la première partie d'interface comprend un premier joint et la deuxième partie d'interface comprend un deuxième joint, les premier et deuxième joints étant comprimés lorsque le boîtier du module de communication est fixé mécaniquement sur la surface externe du corps du drone au moyen de l'interface.
- l'une des première et deuxième parties d'interface comporte un organe en saillie et l'autre des première et deuxième parties d'interface comporte une dépouille, l'organe en saillie étant engagé dans la dépouille lorsque le boîtier du module de communication est fixé mécaniquement sur la surface externe du corps du drone au moyen de l'interface.
- le joint appartenant à la partie d'interface qui comprend l'organe en saillie est un joint torique qui entoure l'organe en saillie et le joint appartenant à la partie d'interface qui comprend la dépouille est disposé dans le fond de la dépouille.
- l'une des première et deuxième parties d'interface comporte des contacts électriques à piston.
- le boitier du module de communication comporte au moins une antenne reliée directement à une carte de communication du module de communication.
- le boitier du module de communication comporte un connecteur de câble permettant un contrôle filaire du drone.

L'invention a aussi pour objet un ensemble formé d'un corps de drone et d'au moins un premier module de communication et un deuxième module de communication dans lequel :
- le corps de drone et le premier module de communication appartiennent à un drone, conforme à ce qui précède, avec une première partie d'interface ménagée sur la surface externe du corps du drone et une deuxième partie d'interface ménagée sur un premier boitier du premier module de communication ;
- le deuxième module de communication comprend un deuxième boitier ;
- le deuxième boitier comporte une deuxième partie d'interface analogue à la deuxième partie d'interface du premier boitier ; et
- le deuxième module de communication peut être monté en lieu et place du premier module de communication, en formant un drone conforme à ce qui précède.

L'invention apparaîtra plus clairement à la lecture de la description qui va suivre, donnée uniquement à titre d'exemple non limitatif, et faite en référence aux dessins dans lesquels :
[Fig 1] La figure 1 est une vue en perspective d'un drone conforme à l'invention ;
[Fig 2] La figure 2 est une vue à plus grande échelle correspondant au cadre II-II de la figure 1, où le module de communication est représenté détaché du corps du drone.
[Fig 3] La figure 3 est une vue analogue à la figure 2, où le corps du drone est ouvert, où le module de communication des figures 1 et 2 est représenté avec une autre orientation et où un deuxième module de communication est visible, les deux modules de communication étant tournés de 90° autour d'un axe vertical par rapport à la position du module de la figure 2.
[Fig 4] La figure 4 est un éclaté du module de communication représenté sur les figures 1 à 3.

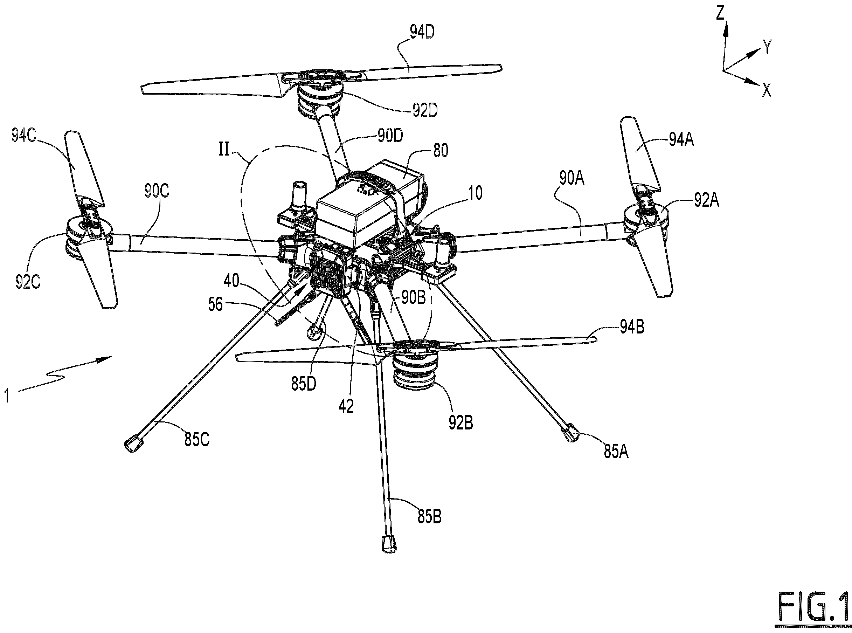

Un drone 1 conforme à l'invention est représenté sur la figure 1. Le drone 1 comprend un corps 10, un module de communication 40 et avantageusement une alimentation électrique 80, quatre pied 85A, 85B, 85C et 85D et quatre bras 90A, 90B, 90C et 90D. Les quatre bras 90A, 90B, 90C, 90D portent chacun un moteur 92A, 92B, 92C, 92D et une hélice de sustentation 94A, 94B, 94C, 94D entrainée en rotation par le moteur 92A, 92B, 92C, 92D.

En pratique, l'alimentation électrique 80 est avantageusement formée par une ou plusieurs batteries rechargeables, montées de façon amovibles sur le corps 10.

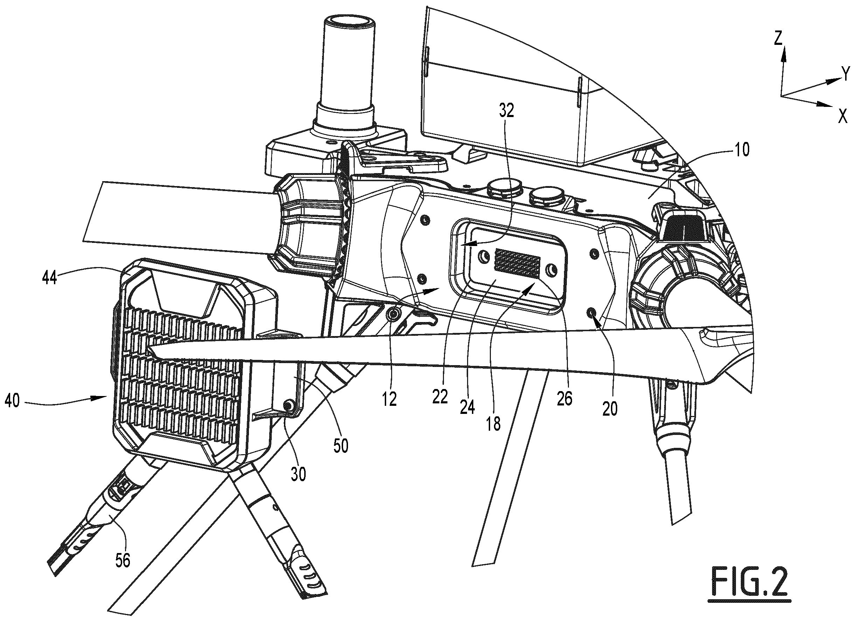

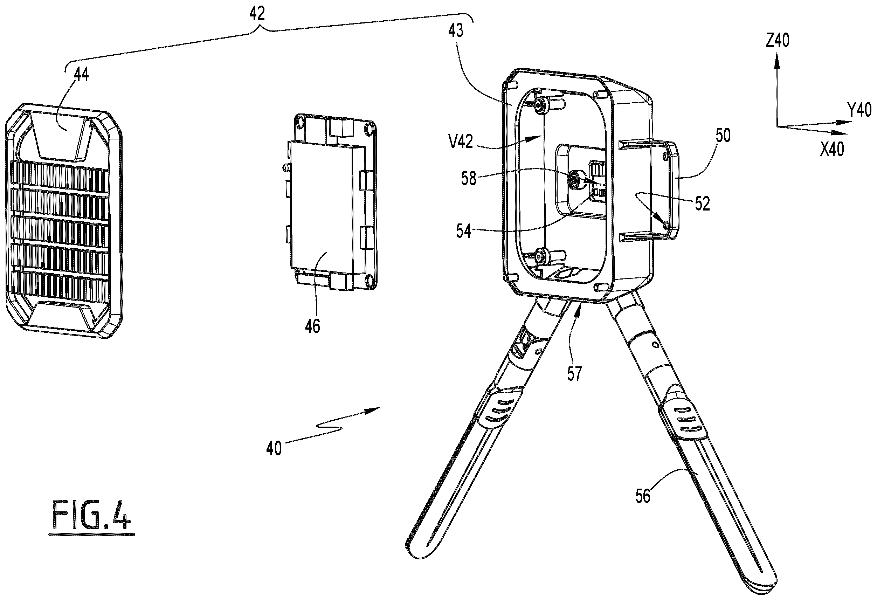

On définit un repère orthonormé direct commun aux figures 1, 2, 3 et 4 composé des axes X, Y et Z. On considère le drone 1 posé sur une surface plane et horizontale. Les axes X, Y et Z coïncident avec les axes d'attitude connus pour les machines volantes, que sont les axes de tangage, coïncidant avec l'axe X, l'axe de roulis, coïncidant avec l'axe Y, et l'axe de lacet, coïncidant avec l'axe Z.

Le corps 10 se présente globalement sous la forme d'un parallélépipède, dont les six faces composent une surface externe 12 du corps 10 et sont octogonales aux axes X, Y et Z. L'alimentation électrique 80 est montée sur une face supérieure de la surface externe 12. Un accessoire tel qu'une caméra peut être monté sur une face inférieure de la surface externe 12. Ces faces supérieure et inférieure sont perpendiculaires à l'axe de lacet Z.

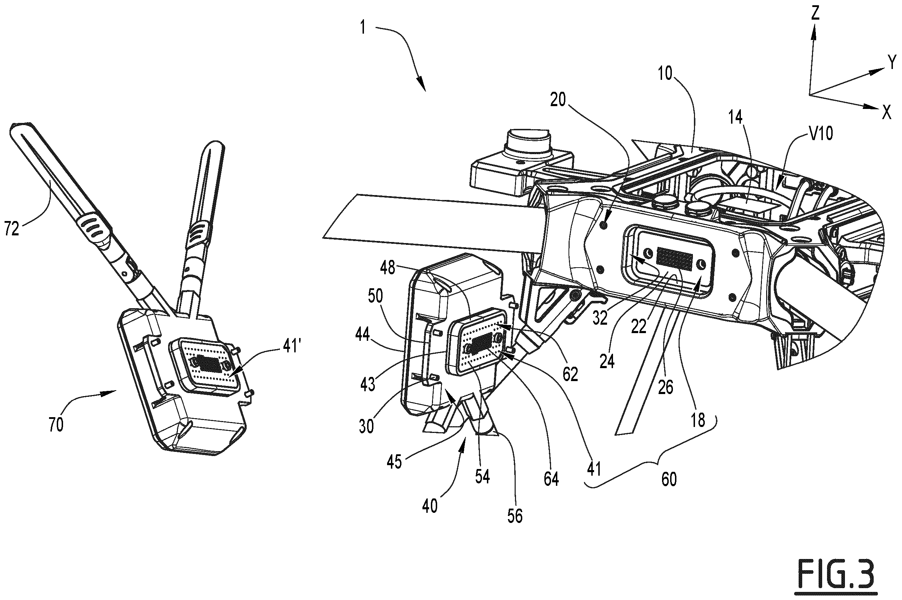

Le corps 10 définit un volume intérieur V10, visible sur la figure 3 par arrachement de la face supérieure. Un contrôleur de vol 14 du drone 1 est situé dans le volume intérieur V10. Le contrôleur de vol 14 présente un fonctionnement connu en soi et remplit notamment les fonctions de stabilisation du drone ou de traitement d'autres informations relatives au pilotage du drone 1 ainsi que le contrôle de l'alimentation des moteurs 94A, 94B, 94C, 94D à partir de l'alimentation électrique 80. La puissance électrique fournie aux moteurs 94A, 94B, 94C, 94D est gérée par une carte de distribution de puissance électrique et des contrôleurs de vitesse moteur, non représentés. Le calcul de la position du drone est réalisé au moyen d'une unité de calcul associée à des récepteurs GNSS (global navigation satellite systems), non représentés.

Le corps 10 du drone 1 comprend une première partie d'interface 18 ménagée sur la surface externe 12, ici sur l'une des faces orthogonales à l'axe de roulis Y. La première partie d'interface 18 est reliée au contrôleur de vol et avantageusement à l'alimentation électrique 80.

La première partie d'interface 18 est traversée parallèlement à l'axe de roulis Y par quatre trous taraudés 20.

Avantageusement, la première partie d'interface 18 comporte une dépouille 24 s'étendant, parallèlement à l'axe de roulis Y, depuis la surface externe 12.

Avantageusement, la première partie d'interface comprend un joint d'étanchéité 22, de préférence un joint mousse, disposé dans le fond de la dépouille 24.

Le matériau du joint 22 est adapté à sa fonction d'étanchéité et peut être, par exemple de l'EPDM.

La première partie d'interface comprend avantageusement des contacts électriques à piston 26 disposés au fond de la dépouille 24 et connectés au contrôleur de vol 14 et avantageusement à l'alimentation électrique 80. Par exemple, les contacts électriques à piston 26 sont au nombre de quarante et sont agencés sur quatre lignes de dix contacts à piston. Chacun des contacts électriques à piston 26 comporte un axe de connexion parallèle à l'axe de roulis Y, c'est-à-dire que les contacts électriques à piston 26 coopérant avec une carte de circuit imprimé 54 du module de communication 40 peuvent être connectés à cette dernière par un mouvement de translation parallèle à l'axe de connexion.

Le module de communication 40 comprend un boitier 42 étanche aux liquides et à la poussière. Ce boîtier permet le montage du module de communication 40 dans une zone exposée aux intempéries, notamment à l'extérieur du corps 10.

On définit un repère orthonormé direct commun aux figures 1, 2, 3 et 4 composé des axes X40, Y40 et Z40. En configuration montée du module de communication 40 sur le corps 10, les axes X40, Y40 et Z40 sont respectivement confondus avec les axes X, Y et Z.

Le boitier 42 se présente globalement sous la forme d'un parallélépipède, dont les faces sont octogonales aux axes X40, Y40 et Z40. Le boitier 42 comprend une partie principale 43 et un couvercle 44 rapporté sur la partie principale et qui ferme un volume interne V42 du boîtier 42.

Le module de communication 40 comprend une carte de communication 46 configurée pour établir la liaison de données, dans un domaine propre défini par une fréquence, une puissance et/ou un niveau de cryptage, avec un autre module de communication manipulé par l'utilisateur. La carte de communication 46 est logée dans le volume interne V42 du boitier 42.

De façon avantageuse, le couvercle 44 forme un dissipateur thermique permettant d'évacuer la chaleur générée par la ou les cartes de communication 46. A titre d'exemple non limitatif, le couvercle 44 peut être en aluminium.

Le module de communication 40 comprend une deuxième partie d'interface 41 ménagée sur une surface avant 45, ici sur l'une des faces orthogonales à l'axe de roulis Y40. Cette surface avant est visible à la figure 3.

Par convention l'avant du module de communication 40 est le côté de ce module tourné vers le corps 10 en configuration montée du module de communication 40 sur le corps 10.

La deuxième partie d'interface 41 comprend une extension latérale 50 de la surface avant 45, suivant l'axe de tangage X, traversée par quatre trous 52. Les trous 52 de l'extension latérale 50 sont, lorsque le module de communication 46 est monté sur le corps 10 du drone 1, coaxiaux avec les trous taraudés 20.

Ces trous reçoivent alors des vis 30 de solidarisation du boîtier 42 au corps 10, plus précisément de la deuxième partie d'interface 41 sur la première partie d'interface 18. La deuxième partie d'interface 41 comprend la carte de circuit imprimé 54, dite aussi PCB ou « Printed Circuit Board » en anglais, comprenant des circuits imprimés, non représentés. Les circuits imprimés sont des circuits conducteurs d'électricité, ménagés dans la carte de circuit imprimé réalisée en un matériau électriquement isolant, les circuits imprimés étant disposés à la surface et au sein du matériau de la carte de circuit imprimé. Les circuits imprimés peuvent ainsi traverser la carte de circuit imprimé sans rompre l'étanchéité de la carte. De tels circuits sont dits des circuits traversants, qui permettent de relier électriquement une face de la carte de circuit imprimé à la face opposée de la carte de circuit imprimé, de façon étanche. Une face arrière 58 de la carte de circuit imprimé 54 est connectée à la carte de communication 46 par des câbles ou des connecteurs enfichables non représentés.

Le module de communication 40, comprend également des antennes 56, dont la forme et le nombre dépendent du domaine propre à la liaison de données établie par la carte de communication 46, ici au nombre de deux. Les antennes 56 sont directement connectées à la carte de communication 46, dans le volume V42, et s'étendent à l'extérieur du boitier 42 au-delà d'une face inférieure 57 de ce boîtier.

En variante, le nombre d'antennes est différent de deux. Il peut être égal à un ou supérieur ou égal à trois.

Avantageusement, la deuxième partie d'interface 41 comprend un organe en saillie 48 s'étendant, parallèlement à l'axe de roulis Y, depuis la surface avant 45. L'organe en saillie 48 a une forme complémentaire à la forme de la dépouille 24 de la première partie d'interface 18 de manière à ce que l'organe en saillie 48 peut être logé sans jeu dans la dépouille 24.

Avantageusement, la deuxième partie d'interface 41 comprend un joint d'étanchéité 43, de préférence un joint torique, disposé autour de l'organe en saillie 48.

Le matériau du joint 43 est adapté à sa fonction d'étanchéité et peut être, par exemple en Caoutchouc Nitrile NBR.

Lorsque le module de communication 40 est monté sur le corps 10 du drone 1, la connexion entre la première partie d'interface 18 et la deuxième partie d'interface 41, par coopération des contacts électriques à piston 26 avec des contacts électriques fixes 64 prévus sur une face avant 62 de la carte de circuit imprimé 54, crée une interface 60 permettant de connecter le contrôleur de vol 14 au module de communication 40. Avantageusement, l'interface 60 connecte également le module de communication 40 à l'alimentation électrique 80.

Lors du montage du module de communication 40 sur le drone 1, le module de communication 40 est approché du corps 10 du drone 1, par un mouvement de translation parallèle à l'axe de roulis Y, de manière à ce que la deuxième partie d'interface 41 ménagée sur la face avant 45 du module de communication 40 soit en vis-à-vis de la première partie d'interface 18 ménagée sur la surface externe 12 du drone 10.

Le positionnement de la deuxième partie d'interface 41 par rapport à la première partie d'interface 18 est guidé par l'organe en saillie 48 venant se loger dans la dépouille 24 de la première partie d'interface 18 jusqu'à ce que la carte de circuit imprimé 54 entre contact avec les contacts électriques à piston 26.

Le module de communication 40 peut être monté sur le corps 10 dans la position représentée à la figure 1, ainsi que dans une position tournée de 180° autour de l'axe de roulis Y, notamment dans le cas où l'alimentation électrique 80 est montée sous le corps 10 ou dans le cas où l'altitude de pilotage de l'utilisateur est supérieure à l'altitude de vol du drone 1. Pour ce faire, les contacts à piston 26 sont compatibles avec une interaction avec les contacts électriques fixes 64 dans ces deux positions. En outre, il n'est pas prévu de détrompeur mécanique qui imposerait l'orientation du module de communication 40 autour de l'axe de roulis Y, autre que l'organe en saillie 48 et la dépouille 24.

Lors du positionnement de l'organe en saillie 48 dans la dépouille 24, l'organe en saillie comprime le joint 22 disposé au fond de la dépouille 24 et un bord interne 32 de la dépouille comprime le joint 43 assurant ainsi l'étanchéité de l'interface 60 à l'eau et à la poussière. Ainsi, l'interface 60 est étanche.

Une fois monté sur le corps 10 du drone, le module de communication 40 est mécaniquement fixé au drone 1 par les vis 30 traversant respectivement les trous 52 puis serrée, respectivement, dans les trous taraudés 20.

La fixation obtenue au moyen des organes de guidage mécanique 24 et 48 et des vis 30 est amovible.

Une fois monté sur le corps 10 du drone, le module de communication 40 est connecté électriquement au contrôleur de vol 14, grâce aux contacts électriques 24 et 64. Ainsi, la connexion électrique entre les éléments 10 et 40 est de type automatique ou « prêt à l'emploi », autrement dit « plug and play » en Anglais. En d'autres termes, le module de communication 40 est une solution dite « clef en main » permettant de piloter le drone 1 selon une liaison de données définie par le module de communication 40.

Le drone 1 comprend, avantageusement, un deuxième module de communication 70. Le deuxième module de communication 70 est comparable au module de communication 40 et comprend une carte de communication, non représentée, et des antennes 72 permettant d'établir une liaison de données dans un domaine différent du domaine de la liaison de données établie par la carte de communication 46 du module de communication 40.

Une deuxième partie interface 41', identique à la deuxième partie d'interface 41 du premier module de communication 40, est prévue sur le deuxième module de communication 70.

Lorsque l'utilisateur souhaite changer le domaine de la liaison de données utilisable avec le drone 1, les vis 30 sont dévissées et le module de communication 40 est retiré du corps 10 du drone 1 par un mouvement de translation suivant l'axe de roulis Y. Le deuxième module de communication 70 est alors monté, en lieu et place du module de communication 40, sur le corps 10 du drone 1 selon le même procédé de montage que pour le module de communication 40. Une fois le deuxième module de communication 70 monté sur le corps 10 du drone 1, la carte de communication du module de communication 70 et le contrôleur de vol 14 sont connectés, par l'interface formée par la première partie d'interface 18 du corps 10 et la deuxième partie d'interface 41' du module de communication 70, automatiquement sans devoir changer les branchements ni la configuration du drone, et une nouvelle liaison de données est établie avec l'utilisateur. En d'autres termes, l'utilisateur peut changer la liaison de données de pilotage facilement et rapidement grâce aux premier et deuxième modules de communication 40 et 70, notamment grâce aux connexions électriques de type automatique ou « prêt à l'emploi », autrement dit « plug and play » en Anglais entre les éléments 10 et 40 et les éléments 10 et 70.

En variante, non représentée, le module de communication 40 comporte un connecteur de câble permettant de connecter un câble, non représenté, établissant une liaison de données filaire avec l'utilisateur. Le connecteur de câble est connecté à la carte de circuit imprimée 54 permettant ainsi lors du montage du module de communication 40 sur le corps 10 du drone 1, d'établir la liaison de données filaire entre l'utilisateur et le contrôleur de vol 14. Dans ce cas, le module de communication est dépourvue d'antenne.

Selon une variante non représentée de l'invention, la deuxième partie d'interface 41 comprend une dépouille s'étendant, parallèlement à l'axe de roulis Y, depuis la surface avant 45 et la première partie d'interface 18 comprend un organe en saillie s'étendant, parallèlement à l'axe de roulis Y, depuis la surface externe 12. L'organe en saillie a une forme complémentaire à la forme de la dépouille de la deuxième partie d'interface de manière à ce que l'organe en saillie peut être logé sans jeu dans la dépouille. La fixation mécanique et la connexion de la première partie d'interface 18 avec la deuxième partie d'interface 41 sont réalisées par la translation parallèlement à l'axe de roulis Y du module de communication vers le corps 10 du drone 1, le mouvement de translation étant guidé par la dépouille, ménagée sur la deuxième partie d'interface 41, venant réceptionner l'organe en saillie, ménagé sur la première partie d'interface 18. Cette variante est une solution miroir du mode de réalisation représenté sur les figures.

Selon une autre variante, également non représentée, la première partie d'interface 18 comprend une carte de circuit imprimé, connectée au contrôleur de vol 14 et avantageusement à l'alimentation électrique 80, et la deuxième partie d'interface comprend des contacts électriques à piston connectés à la carte de communication 46. Les contacts électriques à piston sont au nombre de quarante et sont agencés sur quatre lignes de dix contacts à piston. Chacun des contacts électriques à piston comporte un axe de connexion parallèle à l'axe de roulis Y, c'est-à-dire que les contacts électriques à piston coopérant avec la carte de circuit imprimé de la première partie d'interface 18 peuvent être connectés à cette dernière par un mouvement de translation parallèle à l'axe de connexion. La connexion entre le module de commande 40 et le contrôleur de vol 14 est réalisée par la connexion entre la première partie d'interface 18 et la deuxième partie d'interface 41, par contact des contacts électriques à piston avec une face avant de la carte de circuit imprimé.

Le nombre de contacts électriques à piston utilisé dans l'une des partie d'interface et le nombre de contacts fixes utilisés sur la carte électronique de l'autre partie d'interface est variable et peut être adapté en fonction des besoins.

Toute caractéristique décrite ci-avant pour un mode de réalisation ou une variante est applicable aux autres modes de réalisation et variantes décrits ci-avant, pour autant que cela est techniquement possible.

## Revendications

1. Drone (1) comprenant :
- un corps (10) comportant une paroi extérieure délimitée par une surface externe (12) ;
- un contrôleur de vol (14) installé dans un volume interne (V10) du corps (10); et
- un module de communication (40) ;
**caractérisé en ce que**
- le module de communication (40) comprend un boîtier (42) ; et
- le boîtier (42) du module de communication (40) est fixé mécaniquement de façon amovible sur la surface externe (12) du corps (10) du drone (1) et le module de communication (40) est connecté au moins au contrôleur de vol (14) au moyen d'une interface (60) comprenant une première partie d'interface (18) ménagée sur la surface externe (12) du corps (10) du drone (1) et une deuxième partie d'interface (41) ménagée sur le boitier du module de communication (40).

2. Drone (1) selon la revendication précédente dans lequel l'interface (60) connecte le module de communication (40) à une alimentation électrique (80).

3. Drone (1) selon l'une quelconque des revendications précédentes dans lequel l'interface (60) est étanche.

4. Drone (1) selon la revendication 3 dans lequel la première partie d'interface (18) comprend un premier joint (22) et la deuxième partie d'interface (41) comprend un deuxième joint (43), les premier et deuxième joints (22, 43) étant comprimés lorsque le boîtier (42) du module de communication (40) est fixé mécaniquement sur la surface externe (12) du corps (10) du drone (1) au moyen de l'interface (60).

5. Drone (1) selon l'un quelconque des revendications précédentes dans lequel l'une des première et deuxième parties d'interface (18, 41) comporte un organe en saillie (48) et l'autre des première et deuxième parties d'interface comporte une dépouille (24), l'organe en saillie (48) étant engagé dans la dépouille (24) lorsque le boîtier (42) du module de communication (40) est fixé mécaniquement sur la surface externe (12) du corps (10) du drone (1) au moyen de l'interface (60).

6. Drone (1) selon les revendications 4 et 5 dans lequel le joint (43) appartenant à la partie d'interface (41) qui comprend l'organe en saillie (48) est un joint torique qui entoure l'organe en saillie (48) et le joint (22) appartenant à la partie d'interface qui (18) comprend la dépouille (24) est disposé dans le fond de la dépouille (24).

7. Drone (1) selon l'un quelconque des revendications précédentes dans lequel l'une des première et deuxième parties d'interface (18, 41) comporte des contacts électriques à piston (26).

8. Drone (1) selon l'un quelconque des revendications précédentes dans lequel le boitier du module de communication (40) comporte au moins une antenne (56) reliée directement à une carte de communication (46) du module de communication (40).

9. Drone (1) selon l'un quelconque des revendications 1 à 7 dans lequel le boitier du module de communication (40) comporte un connecteur de câble permettant un contrôle filaire du drone (1).

10. Ensemble formé d'un corps (10) de drone (1) et d'au moins un premier module de communication (40) et un deuxième module de communication (70) dans lequel
- le corps (10) de drone (1) et le premier module de communication (40) appartiennent à un drone (1) selon l'une des revendications précédentes avec une première partie d'interface (18) ménagée sur la surface externe (12) du corps (10) du drone (1) et une deuxième partie d'interface (41) ménagée sur un premier boitier (42) du premier module de communication (40) ;
- le deuxième module de communication (70) comprend un deuxième boitier ;
- le deuxième boitier comporte une deuxième partie d'interface (41') analogue à la deuxième partie d'interface (41) du premier boitier (42) ; et
- le deuxième module de communication (70) peut être monté en lieu et place du premier module de communication (40), en formant un drone (1) selon l'une des revendications précédentes.
